**Europäisches Patentamt**

**European Patent Office**

**Office européen des brevets**

(19)

(11) Veröffentlichungsnummer : **0 059 841**
**B1**

(12) **EUROPÄISCHE PATENTSCHRIFT**

(45) Veröffentlichungstag der Patentschrift :
09.09.87

(51) Int. Cl.⁴ : **G 01 N 27/46**

(21) Anmeldenummer : **82100822.4**

(22) Anmeldetag : **05.02.82**

(54) Elektrochemischer Gasanalysator.

(30) Priorität : **09.03.81 DE 3108889**

(43) Veröffentlichungstag der Anmeldung :
**15.09.82 Patentblatt 82/37**

(45) Bekanntmachung des Hinweises auf die Patenterteilung : **09.09.87 Patentblatt 87/37**

(84) Benannte Vertragsstaaten :
**CH DE FR GB LI**

(56) Entgegenhaltungen :
AT-B-   359 751
DE-B- 1 090 004
DE-B- 1 091 776
DE-C- 1 133 922
DE-C- 2 454 659
FR-A- 2 291 493
NL-A- 6 905 745
US-A- 3 573 174
US-A- 3 912 613
US-A- 4 127 462
ELECTRONIQUE ET MICROELECTRONIQUE INDUSTRIELLES, Nr. 158, 1. Juni 1972, (FR), A. GOUPIL:
"Pollution atmosphérique: la mesure de l'anhydride sulfureux", Seiten 35-39.
V.H. Regender, "Automatic Ozone Recorder Small Model", Techn. Man. 19.11.56, Dep. of Physics, the Univ. of New Mexico.
Philip Techn. Rev. 32 (1971), 33f, H.J. Brouwer u.a.

(73) Patentinhaber : **Kernforschungsanlage Jülich Gesellschaft mit beschränkter Haftung**
**Postfach 1913**
**D-5170 Jülich 1 (DE)**

(72) Erfinder : **Divisek, Jiri, Dr.**
**Gutenbergstrasse 34**
**D-5170 Jülich (DE)**
Erfinder : **Fürst, Leander**
**Gutenbergstrasse 22**
**D-5170 Jülich (DE)**
Erfinder : **Luft, Harald**
**In den Domänen 1**
**D-5162 Niederzier 5 (DE)**

## Beschreibung

Die Erfindung bezieht sich auf einen elektrochemischen SO$_2$-Analysator zur Bestimmung des SO$_2$-Gehalts in Gasen mit einer die Grenzströme der zu bestimmenden Gase anzeigenden Kohle-Meßelektrode und einer unpolarisierbaren Kupfer-Gegenelektrode in einem Behälter mit verdünnter schwefelsaurer Kupfersulfatlösung als Durchlauf-Elektrolyt (siehe z. B. DE-B-1 091 776).

Die Kontrolle des SO$_2$-Gehaltes in Abgasen ist gegenwärtig eine der wichtigsten meßtechnischen Aufgaben geworden. Alle bekannten bisher verfügbaren Meßgeräte, die auf verschiedenen Prinzipien arbeiten (Infrarot, Wärmeleitfähigkeit, UV usw.) sind entweder zu teuer oder in sehr beschränkten Meßbereichen anwendbar.

Aufgrund eines Vergleichs kann man zeigen, daß eine elektrochemisch wirkende Meßapparatur sowohl sehr preisgünstig als auch in einem breiten Konzentrationsspektrum allgemein anwendbar ist. Darüberhinaus kann man auch mehrere oxidierbare bzw. reduzierbare Stoffe durch geeignete Wahl des Arbeitspotentials nebeneinander analytisch erfassen, was ein zusätzlicher Vorteil ist.

Eine elektrochemische Meßzelle für SO$_2$ wurde bereits von der AEG konstruiert (Chemie-Ing. Technik, 49, 328 (1977)). Diese Zelle wurde als Modifizierung der üblichen Brennstoffzellen konzipiert, d. h. sie arbeitet mit porösen Elektroden. Diese Tatsache stellt sicherlich eine nicht vernachlässigbare Komplikation dar. Da sowohl die Meß- als auch die Gegenelektrode in den Polarisationseigenschaften ungefähr gleichwertig sind, muß diese Zelle mit einem Potentiostaten und Dreielektrodensystem (Meß-, Gegen- und Bezugselektrode) arbeiten. Das ist eine weitere Komplikation, die sich als Verteuerung der Meßanlage auswirken muß. Die Geschwindigkeit der Signaländerung mit zeitlich veränderlicher SO$_2$-Konzentration ist nicht bekannt, sie kann jedoch mit ziemlicher Verzögerung eintreten, da der diffusive Gasdurchgang durch die inerte Teflonunterschicht sicherlich gehemmt ist.

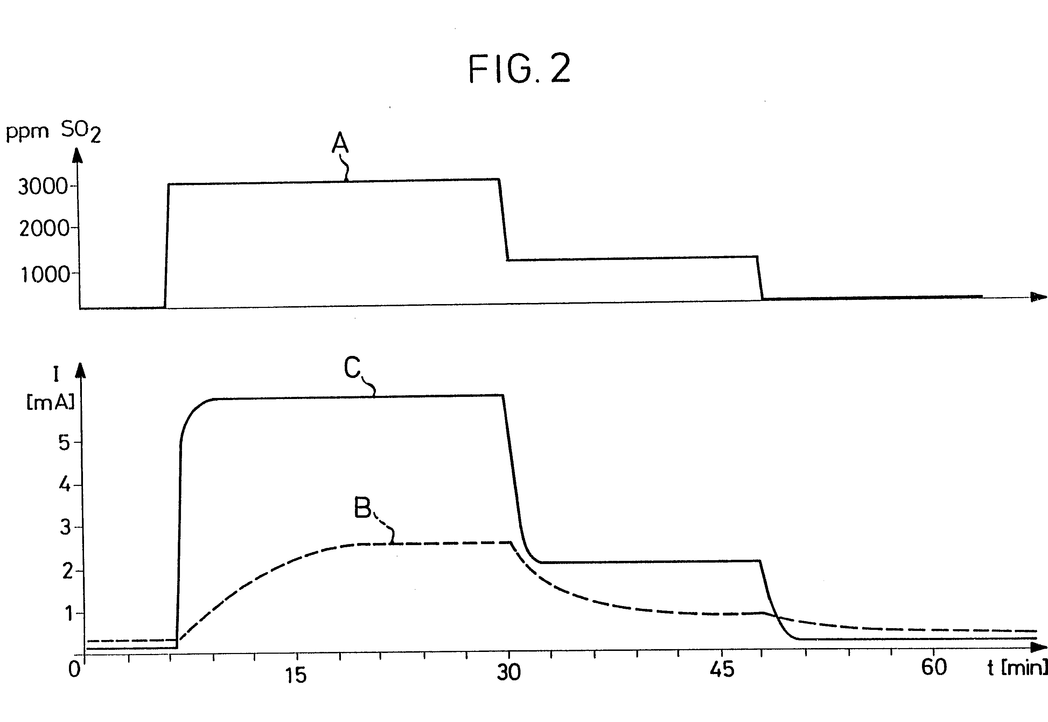

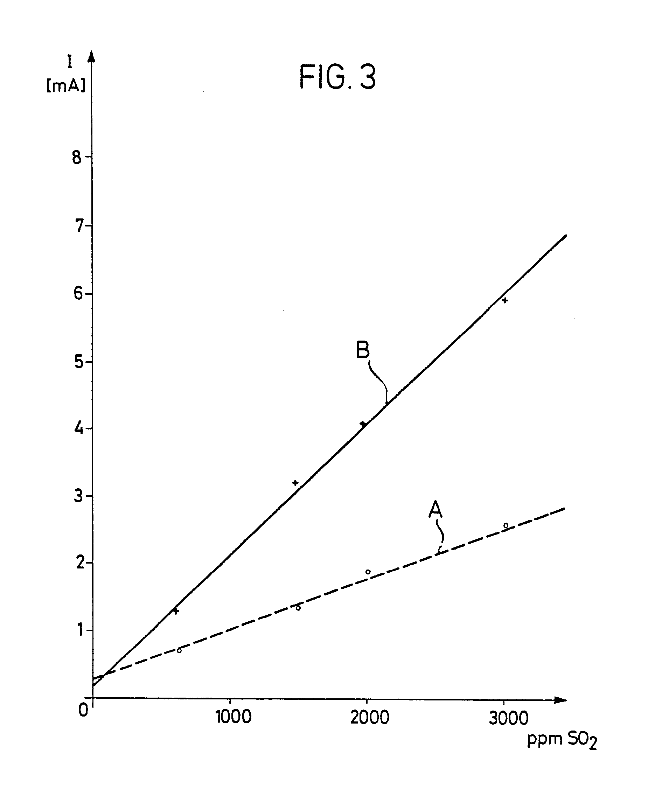

Eine andere Methode elektrochemischer Messung der SO$_2$-Konzentration ist aus der Mitteilung von J.V.A. Novak (Collection Czech. Chem. Commun. 25. 3 099 (1960) bekannt. Diese basiert auf der Erfassung der Änderung der diffusionsgehemmten polarographischen Stufe des in einem Elektrolyten gelösten SO$_2$. Als Indikationselektrode wird ein Kohlestab verwendet. Als unpolarisierbare Gegenelektrode dient metallisches Kupfer in einer schwefelsauren Lösung von Cu$^{2+}$-Ionen (CuSO$_4$), die mit geringer Geschwindigkeit (0,05-0,5 ml/min) durch die Elektrolysezelle geschickt wird. Dieser Analysator ist sehr robust, denkbar einfach, weitgehend störungsfrei im Betrieb und schließlich auch preiswert. Nachteilig ist jedoch seine konstruktive Ausführung. Die seitliche Gaszufuhr zur schräg geschliffenen Meßelektrode verursacht wegen unbefriedigender Elektrolytführung eine zu große Systemträgheit bei plötzlicher Änderung der SO$_2$-Konzentration. Dabei wird die Signaländerung nur mit erheblicher Zeitverzögerung registriert (vgl. Fig. 2 ; Kurve A : SO$_2$-Konzentrationsänderung, B : Signal des nachgebauten NOVAK-Analysators). Die dem Gasstrom direkt zugängliche Elektrodenoberfläche ist außerdem so klein, daß auch der gemessene Strom als Maß für die SO$_2$-Konzentration nur relativ klein ist. Entsprechend gering ist natürlich auch die erreichbare Meßempfindlichkeit (Fig. 3, Kurve A). Versucht man durch die Vergrößerung der Elektrodenoberfläche (dickerer Stab) diesen Nachteil zu beseitigen, so wird das Meßsignal zwar erhöht, dafür aber die dem Gasstrom direkt zugängliche Oberfläche noch relativ. kleiner gehalten und die bereits schon zu lange Signalverzögerung noch weiter verschlechtert.

Abwandlungen der elektrochemischen SO$_2$-Bestimmung durch eine Anordnung (gemäß DE-PS-1 133 922), bei der ein dünner Elektrolytfilm aus einem vom Gaszustrom gespeisten Vorrat kontinuierlich über die Meßelektrode abwärtsläuft oder durch Verwendung aktiver Sensor-Elektroden aus Gold auf Kohlenstoff (US-PS-4 127 462) oder auch durch den Einsatz einer porösen Kohleelektrode mit einer spezifischen Oberfläche von 1 bis 20 m$^2$/g in einer Kurzschlußstrom-Meßanordnung (DE-PS-2 454 659) haben sich bislang nicht durchgesetzt.

Um jede Reagenzzufuhr zu vermeiden und damit einen Langzeitbetrieb zu fördern sowie um die Empfindlichkeit des Analysators zu steigern, wurde von H. J. Brouwer u. a. (Philips Techn. Rev. 32 (1971) 33 f.) für die elektrochemische SO$_2$-Bestimmung in Gasen ein Br/Br'-haltiger Elektrolyt vorgesehen. Bei diesem System ist eine konstante Zelltemperatur von äußerster Wichtigkeit, was gerade hier — mehr noch als bei den anderen Anordnungen, für die ebenfalls Thermostatisierungen empfohlen werden — eine strikte Temperaturkontrolle unter zusätzlichem Aufwand nötig macht.

Ziel der Erfindung ist daher ein insbesondere für die fortlaufende Rauchgas-Überwachung bei Feuerungsanlagen geeigneter empfindlich und verläßlich arbeitender SO$_2$-Analysator mit geringem Konstruktionsaufwand.

Der zu diesem Zweck entwickelte erfindungsgemäße SO$_2$-Analysator ist im wesentlichen gekennzeichnet durch eine an sich bekannte zweiarmige Ausbildung des Behälters, dessen Arme sowohl am Behälterboden als auch am oberen Ende durch Überlauf in Verbindung stehen und in dessen einem Arm Meß- und Gegenelektrode untergebracht sind, während der andere Arm das Gaseinleitungsrohr aufnimmt, so daß durch Meßgaseinleitung in den Elektrolyten eine Zirkulationsströmung nach dem Mammutpumpenprinzip hervorgerufen wird und durch eine Verdoppelung des Behälters, wobei der eine als Meßzelle und der andere als Referenzzelle dient, sowie eine elektrische Schaltung zur Ermittlung der Differenz der Ströme beider Zellen als Meßwert.

Bei diesem Analysator werden drei wesentliche Elemente, und zwar

die elektrochemische $SO_2$-Bestimmung mit Kohle/Kupfer-Elektroden in $H_2SO_4$/$CuSO_4$-Lösung unter ständigem Elektrolytdurchlauf

die kontinuierliche Passage von praktisch gasgesättigtem Elektrolyten durch die Meßzelle nach dem Mammutpumpenprinzip ; und

die Verdoppelung der Meßzelle durch eine Referenzzelle und Kompensationsschaltung zur Ermittlung der Stromdifferenz beider Zellen miteinander kombiniert und so ein Meßgerät erzielt, daß den genannten Anforderungen sehr gut gerecht wird.

Zwar ist die Ausnutzung des zutretenden Meßgasstromes zur Anregung einer Zirkulation des Elektrolyten durch die Meßzelle an sich seit langem bekannt : So wurde bereits 1956 von V. H. Regener (Techn. Man 19.11.1956 « Automatic Ozone Recorder Small Model », Dep. of Physics, the Univ. of New Mexico) ein solcher Zirkulationsstrom für die Bestimmung von Ozon in Gasen angewandt ; in der US-PS-3 573 174 wird die elektrochemische Fluorbestimmung in Gasen mit einem entsprechenden Elektrolytumlauf beschrieben und schließlich ist ein vom zuströmenden Meßgas angetriebener Elektrolytumlauf aus der US-PS-3 912 613 sogar für die $SO_2$-Bestimmung — allerdings unter Einschaltung der Br/Br'-Systems — bekannt, jedoch wurde die oben genannte erfindungsgemäße Kombination, die eine besonders günstige kontinuierliche $SO_2$-Bestimmung gestattet — trotz zahlreicher unterschiedlicher Entwicklungen auf diesem besonders bedeutsamen Gebiet — bislang nicht vorgesehen.

Das gleiche gilt für die Anordnung einer « Zwillingszelle » in Kompensationsschaltung, wie sie im Prinzip der NL-A1-6 905 745 zu entnehmen ist, allerdings für die polarographische Sauerstoffbestimmung. Eine solche kompensatorische Sauerstoffmessung wird sogar bereits in der oben genannten Arbeit von Regener aus dem Jahre 1956 beschrieben. Eine Übertragung auf das $SO_2$-Meßsystem ist jedoch bislang unterblieben.

Der erfindungsgemäße $SO_2$-Analysator wird insbesondere mit einer konzentrischen Anordnung von Meß- und Gegenelektrode ausgestattet und besonders zweckmäßig ist die Ausführung der zweiarmigen Behälter für die Meßzellen und Gaseinleitung in Form von Bohrungen in einem gemeinsamen Materialblock.

Zwischen Meß- und Gegenelektrode befindet sich vorzugsweise eine Fritte und die Gegenelektrode kann insbesondere durch ein vermittels Schraubverbindung auswechselbares Kupferrohr gebildet werden.

Nachfolgend wird die Erfindung an Hand der beigefügten Zeichnungen näher erläutert ; es zeigen :

Figur 1 einen Vertikalschnitt durch die Meßzelle einer speziellen Ausführungsart eines $SO_2$-Analysators gemäß eines Teiles der Erfindung ;

Figur 2 Kurven für das Ansprechverhalten der Meßzelle des erfindungsgemäßen Analysators im Vergleich zu einem bekannten Analysator ;

Figur 3 Kurven für die erreichbare Meßempfindlichkeit der Meßzelle des erfindungsgemäßen Analysators im Vergleich zu einem bekannten Gerät.

Figur 4 eine Schaltung zur Differenzstrommessung, die zusammen mit den Merkmalen gemäß Figur 1 der Erfindung entspricht ; und

Figur 5 einen Horizontalschnitt durch eine erfindungsgemäße Doppelzelle.

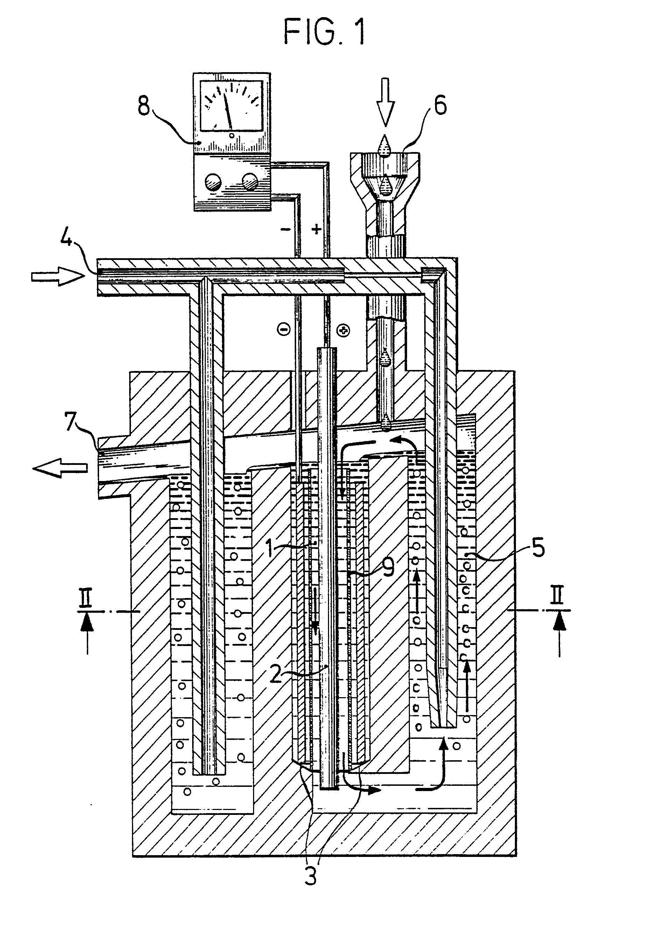

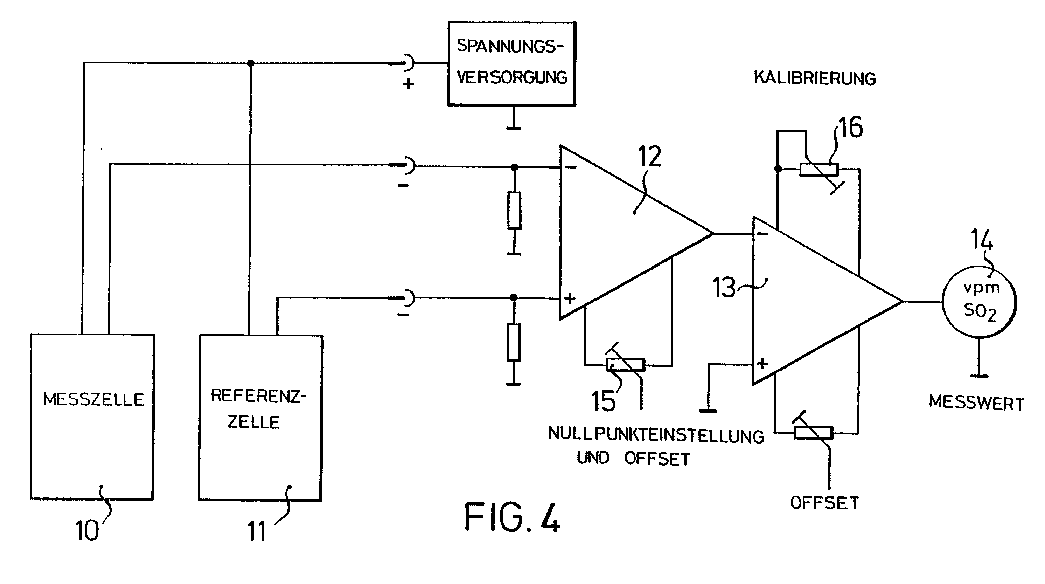

Bei dem in Fig. 1 gezeigten, die Meßzelle umfassenden Teil des $SO_2$-Analysators ist in der eigentlichen Elektrolysezelle 1 eine Meßelektrode 2 in Form eines Kohlestabes angeordnet, an dem im Elektrolyten enthaltenes $SO_2$ oxidiert wird. Als Gegenelektrode ist ein Kupferrohr 3 vorgesehen. Das $SO_2$-haltige Gas tritt bei 4 in den Analysator ein und wird im unteren Bereich des am Boden mit der eigentlichen Elektrolysezelle in Verbindung stehenden Zweiggefäßes 5 eingeleitet, von dem aus gasgesättigter Elektrolyt durch Überlauf in die Elektrolysezelle 1 gelangt. Bei 6 kann frischer Elektrolyt etwa mit 5 ml/min (1-15 ml/min) zugeführt werden und bei 7 verlassen Abgas und Elektrolyt durch Überlauf die Apparatur. Zur Stromversorgung und Ermittlung der Grenzstromdifferenz gegenüber einer analog ausgebildeten Referenzzelle ist eine hier nur angedeutete Schaltung 8 vorgesehen, die in Fig. 4 mehr im einzelnen zu sehen ist. 9 bezeichnet eine elektrolytdurchlässige Trennwand (wie eine Kunststoff-Fritte), die zweckmäßig, aber nicht notwendig ist.

Bereits mit einer solchen Anordnung können Meßkurven erhalten werden, wie sie durch Kurve C in Fig. 2 angegeben sind, die ein sehr promptes und empfindliches Ansprechen der Zelle auf die tatsächliche $SO_2$-Konzentration (dargestellt durch Kurve A in Fig. 2) zeigt.

In Fig. 3 ist als Kurve B die Meßempfindlichkeit der Meßzelle des erfindungsgemäßen Analysators in Abhängigkeit von der $SO_2$-Konzentration dargestellt, die im Vergleich zu der mit dem bekannten Analysator aufgenommenen Kurve A deutlich verbessert ist.

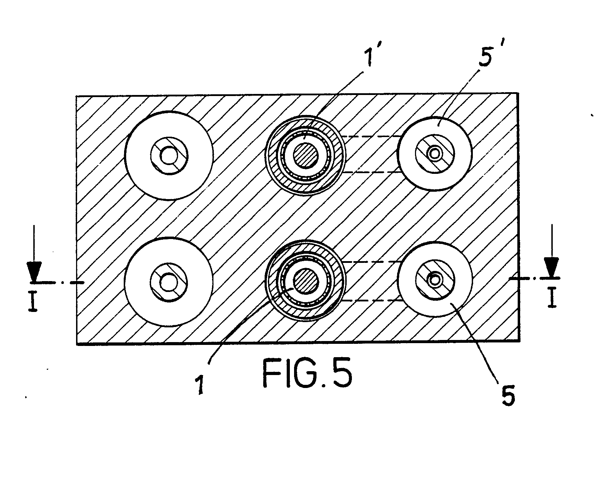

Die ganze Anordnung entspricht Fig. 1 und Fig. 5 einschießlich einer Meß- (10) und Referenzzelle (11) (siehe Figur 4) sowie einer geeigneten elektrischen Schaltung wie in Fig. 4. In dieser sind die beiden Zellen 10 und 11 schematisch angedeutet. (Aufbau jeweils wie in Fig. 1). Beide Graphitelektroden 2 liegen an der gemeinsamen Spannungsquelle. Der Meß- und der Referenzstrom werden dann an einem als Differenzverstärker geschalteten Operationsverstärker 12 miteinander verglichen und eine auftretende Differenz entsprechend verstärkt. Der nachfolgend geschaltete Operationsverstärker 13 verstärkt dieses Signal auf die für das Anzeigemeßgerät 14 notwendige Spannung. Mit dem Potentiometer 15 wird unter Einleitung des gleichen Gases, insbe-

sondere von $SO_2$-freiem Gas, in beide Zellen der Nullpunkt an der Anzeige eingestellt. Danach wird durch die Meßzelle ein Eichgasgemisch geleitet und mit dem Potentiometer 16 die Anzeige am Meßgerät 14 übereinstimmend mit der $SO_2$-Konzentration des Eichgases eingestellt. Bei der eigentlichen Messung wird dann in die Meßzelle das zu überwachende Gas unter gleichen Bedingungen eingeleitet und dessen $SO_2$-Gehalt gegenüber dem durch die Referenzzelle geleiteten Gas ermittelt.

Beim im Kreislauf geführten Elektrolyten, der außerhalb der Zelle von $SO_2$ befreit wird, sollte die bei längerem Betrieb auftretende Cu-Konzentrationsveränderung korrigiert werden. Da die Konzentrationsänderung bei der Überwachung von Gasen, die nur wenig $SO_2$ enthalten, gering und ihr Einfluß auf den Meßwert nur schwach ist, kann man einfach bei der bevorzugten Ausführungsform des Geräts als Zwillingszelle Meß- und Referenzzelle periodisch vertauschen, wobei in der Referenzzelle das in der Meßzelle abgeschiedene Kupfer durch Oxidation durch den im Gas enthaltenen Sauerstoff wieder in Lösung geht.

Nach dem erfindungsgemäßen Prinzip wurden mehrere Analysatoren gebaut, die im nachfolgenden Beispiel beschrieben werden :

Beispiel

Die Meßelektrode wurde aus einem 50 mm langen Kohlestab (Ø 3,0 mm) angefertigt, die Bezugselektrode in Form einer zylinderförmigen Ummantelung (Ø 8,0 mm) aus Kupferrohr. Als Elektrolyt diente 0,02 M $CuSO_4$ + 0,05 M $H_2SO_4$ Lösung, der laufend erneuert wurde. Alternativ kann ein Elektrolyt mit 0,2 M $CuSO_4$ + 0,05 M $H_2SO_4$ im Kreislauf geführt werden, der außerhalb der Zelle durch Behandlung mit Luft in Gegenwart von Aktivkohle von $SO_2$ befreit wird. Das Meßgas wurde mit 0,5 l/min eingeleitet (übliche Werte : 0,5 bis 1,5 l/mm je nach Bauform). Die Kohleelektrode wurde anodisch polarisiert (U = 1,1 V ; Rk. : $SO_2 \rightarrow H_2SO_4$), an der Kathode wurde metallisches Kupfer abgeschieden. Diese Kupferabscheidung stellt wegen der dadurch entstandenen Querschnittsverengungen ein separates Problem dar, dem man z. B. auf folgende Weise begegnen kann :

Das Kupferrohr wurde mittels einfacher Verschraubung mit dem eigentlichen Analysatorkörper verbunden. Es läßt sich deshalb sehr schnell auswechseln und durch ein neues ersetzen. Die dazu notwendigen Zeitabstände hängen von dem $SO_2$-Gehalt (über die Stromstärke) ab. Bei einem $SO_2$-Gehalt im Abgas von 2 000 ppm beträgt der elektrische Strom im Analysator z. B. ca. 4 mA. Der Abstand der Meß- und Gegenelektrode ist anfangs 2,5 mm. Eine Abstandsverringerung durch das abgeschiedene Kupfer bis auf 2,0 mm ist noch zulässig, da die Signalhöhe dadurch noch nicht beeinflußt wird. Bei 4 mA Gesamtstrom entspricht das theoretisch 46 Tagen. Im Normalfall enthalten die Abgase jedoch noch einige Luftmengen, die einem 10 %-igen Sauerstoffgehalt entsprechen. Durch diesen Sauerstoff wird das bereits abgeschiedene Kupfer wieder zurückoxidiert, so daß die Netto-Abscheidungsrate nur mit ca. 70 % der theoretischen Geschwindigkeit abläuft, d. h. der Abstand von 2 mm wird erst nach 65 Tagen erreicht. Bei geringerem $SO_2$-Gehalt verlängern sich natürlich diese Zeitabstände noch weiter. Man kann deshalb das Kupferrohr z. B. einmal in einem oder zwei Monaten ersetzen, was völlig problemlos ist.

Die Querschnittsverengung läßt sich ebenfalls mit geeigneten konstruktiven Maßnahmen eliminieren, indem die beiden Elektroden durch eine Fritte (9 ; Fig. 1) getrennt werden. Der Elektrolyt strömt jetzt zwischen der Meßelektrode und der Fritte bei konstant gebliebenen Abständen. Das Kupfer wird dann hinter der Fritte abgeschieden. Den Innendurchmesser der Gegenelektrode kann man in diesem Fall so groß wählen (z. B. 15 mm), daß man sie nur einmal im Jahr auswechseln muß. Zu diesem Zweck ist der Kopf des Analysatorblocks mit entsprechenden Schraubdurchführungen versehen.

Unabhängig von den jeweiligen Ausführungsarten ist die Zelle gemäß der Erfindung als « Zwillingszelle » (durch Verdoppelung der Anordnung ; siehe Fig. 5 (1 ; 5 und 1' ; 5') konstruiert, wobei jeweils eine « Hälfte » als Meßzelle dient und $SO_2$-haltiges Gas erhält, während die zweite Hälfte als Referenzzelle wirkt, in der gleichzeitig das Kupfer durch Luftoxidation inzwischen zurückoxidiert wird.

Mit einer solchen Zwillingszelle erzielt man eine besonders zweckmäßige Temperaturstabilisierung des Meßstroms :

Die Größe des polarographischen Stroms, der bei vorgegebener Spannung durch die Zelle fließt, wird als Maß der $SO_2$-Konzentration genommen. Dieser Strom ergibt sich durch Depolarisationseffekte an der Anode und setzt sich aus zwei Komponenten zusammen :

a) kinetisch bedingter Grundstrom, der sehr temperaturinstabil ist und

b) diffusionsbedingter Meßstrom, der der $SO_2$-Konzentration proportional ist. Da es sich um einen elektrochemischen Diffusionsstrom handelt, wird er mit einem Temperaturanstieg ebenfalls größer. Auf der anderen Seite wird dieser Stromanstieg durch die temperaturbedingte Verminderung der $SO_2$-Löslichkeit wieder kompensiert, so daß dieser Teilstrom durch Temperaturänderungen praktisch nicht verändert wird.

Wird der gesamte Meßstrom in nur einer Zelle gemessen, so ändert sich unter Temperatureinflüssen die kinetische Komponente und infolgedessen der Gesamtstrom.

Um diesen Effekt zu unterdrücken, werden zwei Zellen genommen. In der ersten (Referenzzelle) wird der Meßelektrode nur Luft oder $SO_2$-freies Abgas (z. B. entsprechend gereinigt) zugeführt, so daß diese Zelle praktisch den kinetischen Grundstrom mißt. In die zweite (Meßzelle) wird das zu überwachende $SO_2$-haltige Gas geleitet. Durch diese Zelle fließt der ganze aus beiden Komponenten zusammengesetzte Strom. Wird die Differenz dieser beiden Ströme gemessen, so erhält man als Meßsignal nur die reine diffusionsbedingte Komponente, die der SO$_2$-Konzentration proportional ist und temperaturstabil bleibt.

Bei der erfindungsgemäßen Zwillingszelle könnten Meß- und Referenzzelle turnusmäßig vertauscht werden, um dem oben genannten Kupferabscheidungproblem zu begegnen. Insbesondere aber wird, wie beschrieben, mit einer Fritte 9 und vorzugsweise auswechselbarem Kupferrohr gearbeitet.

**Patentansprüche**

1. Elektrochemischer SO$_2$-Analysator zur Bestimmung des SO$_2$-Gehalts in Gasen mit einer die Grenzströme der zu bestimmenden Gase anzeigenden Kohle-Meßelektrode und einer unpolarisierbaren Kupfer-Gegenelektrode in einem Behälter mit verdünnter schwefelsaurer Kupfersulfatlösung als Durchlauf-Elektrolyt, gekennzeichnet durch eine an sich bekannte zweiarmige Ausbildung des Behälters (1 ; 5), dessen Arme sowohl am Behälterboden als auch am oberen Ende durch Überlauf in Verbindung stehen und in dessen einem Arm (1) Meß- und Gegenelektrode (2 ; 3) untergebracht sind, während der andere Arm (5) das Gaseinleitungsrohr aufnimmt, so daß durch Meßgaseinleitung in den Elektrolyten eine Zirkulationsströmung nach den Mammutpumpenprinzip hervorgerufen wird und durch eine Verdoppelung des Behälters (1 ; 5), wobei der eine als Meßzelle (10) und der andere als Referenzzelle (11) dient sowie eine elektrische Schaltung (12-16) zur Ermittlung der Differenz der Ströme beider Zellen als Meßwert.

2. SO$_2$-Analysator nach Anspruch 1, gekennzeichnet durch eine konzentrische Anordnung von Meß- und Gegenelektrode (2 ; 3).

3. SO$_2$-Analysator nach Anspruch 1 oder 2, dadurch gekennzeichnet, daß beide Behälter (1 ; 5 und 1' ; 5') als entsprechende Bohrungen in einem gemeinsamen Materialblock ausgeführt sind.

4. SO$_2$-Analysator nach Anspruch 3, gekennzeichnet durch eine Fritte (9) zwischen Meß- und Gegenelektrode (2 ; 3).

5. SO$_2$-Analysator nach einem der vorangehenden Ansprüche, dadurch gekennzeichnet, daß die Gegenelektrode (3) durch ein vermittels Schraubverbindung auswechselbares Kupferrohr gebildet wird.

**Claims**

1. Electrochemical SO$_2$ analyser for determining the SO$_2$ content in gases, with a carbon electrode which indicates the limit currents of the gases being determined, and with a non-polarisable copper counter-electrode, in a container with dilute sulphuric copper sulphate solution as a throughflow electrolyte, characterised by a per se known two-arm construction of the container (1 ; 5), whose arms communicate both at the bottom of the container and also at the upper end through overflow means, and in one arm (1) of which measuring and counter-electrodes (2 ; 3) are arranged, whereas the other arm (5) accommodates the gas introduction pipe, so that by introduction of measurement gas into the electrolyte a circulation flow is brought about on the airlift pump principle, and by doubling of the container (1 ; 5) with one serving as a measuring cell (10) and the other as a reference cell (11), also an electrical circuit arrangement (12-16) for detecting the differences between the currents of the two cells as the measurement value.

2. SO$_2$ analyser according to claim 1, characterised by a concentric arrangement of the measuring electrode (2) and counter-electrode (3).

3. SO$_2$ analyser according to claim 1 or 2, characterised in that the two containers (1 ; 5 and 1' ; 5') are constructed as corresponding bores in a common block of material.

4. SO$_2$ analyser according to claim 3, characterised by a frit (9) between the measuring electrode (2) and the counter-electrode (3).

5. SO$_2$ analyser according to one of the preceding claims, characterised in that the counter-electrode (3) is formed of a copper tube which is made interchangeable by the provision of a screwed connection.

**Revendications**

1. Analyseur électrochimique de SO$_2$ pour déterminer la teneur en SO$_2$ de gaz, comprenant une électrode de mesure en charbon indiquant les courants limites des gaz à déterminer et une contre-électrode en cuivre non polarisable dans une cuve, avec une solution sulfurique diluée de sulfate de cuivre comme électrolyte à circulation continue, caractérisé par une constitution à deux branches, en soi connue, de la cuve (1 ; 5), dont les deux branches communiquent à la fois au fond de la cuve et à l'extrémité supérieure par trop-plein, l'électrode de mesure (2) et la contre-électrode (3) étant logées dans l'un des bras (1), tandis que l'autre bras (5) reçoit le conduit d'amenée des gaz de manière à provoquer par le conduit d'amenée du gaz dans l'électrolyte un courant de circulation suivant le principe de la pompe mammouth, et par un dédoublement en deux cuves (1 ; 5) l'une servant de cellule de mesure (10) et l'autre de cellule de référence (11), ainsi que par un montage électrique (12 à 16) pour déterminer la différence des courants électriques entre les deux cellules comme valeur de mesure.

2. Analyseur de SO$_2$ suivant la revendication 1, caractérisé en ce que l'électrode de mesure (2) et la contre-électrode (3) sont disposées concentriquement.

3. Analyseur de SO$_2$ suivant la revendication 1 ou 2, caractérisé en ce que les deux cuves (1 ; 5 et 1' ; 5') sont constituées sous la forme d'alésages adéquats dans un bloc de matériau commun.

4. Analyseur de $SO_2$ suivant la revendication 3, caractérisé par une fritte (9) entre l'électrode de mesure (2) et la contre-électrode (3).

5. Analyseur de $SO_2$ suivant l'une des revendications précédentes, caractérisé en ce que la contre-électrode (3) est formée d'un tube en cuivre pouvant être remplacé au moyen d'une liaison par vissage.

# FIG. 1

FIG. 2

ppm SO$_2$

3000

2000

1000

A

I [mA]

5

4

3

2

1

0

C

B

15   30   45   60   t [min]

2

FIG. 3

FIG. 4

SPANNUNGS-VERSORGUNG

KALIBRIERUNG

16

12

13

15

NULLPUNKTEINSTELLUNG UND OFFSET

OFFSET

14

vpm SO₂

MESSWERT

MESSZELLE

10

REFERENZ-ZELLE

11

0 059 841

FIG.5